# EUROPEAN PATENT APPLICATION

(11) **EP 2 662 953 A1**
(43) Date of publication of application: **13.11.2013**
(21) Application number: 12732211.3
(22) Date of filing: 06.01.2012
(51) Int. Cl.: H02K 1/27

(54) **REINFORCED PERMANENT MAGNET SYNCHRONOUS MOTOR ROTOR FOR STARTING ON LINE**

(30) Priority: 06.01.2011 CN 201110001138; 06.01.2011 CN 201120001704 U
(71) Applicant: Regal Beloit (Suzhou) Co., Ltd., Taicang, Jiangsu 215400 (CN); REGAL BELOIT AMERICA, INC., Beloit, WI 53511 (US)
(72) Inventor: KIELGAS, Bruce William, Tipp, Ohio (US); WANG, Kai, Taicang, Jiangsu 215400 (CN); CHEN, Yamin, Taicang, Jiangsu 215400 (CN)
(74) Representative: Potter Clarkson LLP
(86) International application number: PCT/CN2012/070103
(87) International publication number: WO 2012/092874

(57) **Abstract**

Disclosed in the present invention is a reinforced permanent magnet synchronous motor rotor for line-start, comprising: standard laminations, conductive bars, magnetic bars, and reinforced laminations; said reinforced laminations being located between standard laminations; the magnetic bars are embedded in the standard laminations and separated by the reinforced laminations, and said conductive bars run through the standard laminations and reinforced laminations overlying one other. Comparing the structures of the reinforced permanent magnet synchronous motor rotor for line-start provided by the present invention and the permanent magnet motor rotor in the prior art, the mechanical strength of the motor rotor is increased effectively and the service life of the motor rotor is lengthened by adding reinforced laminations, under the precondition that motor efficiency is not sacrificed.

## Description

### Technical field

The present invention belongs to the technical field of permanent magnet synchronous motors, and in particular is applied in a motor rotor in a line-start permanent magnet synchronous motor.

### Background

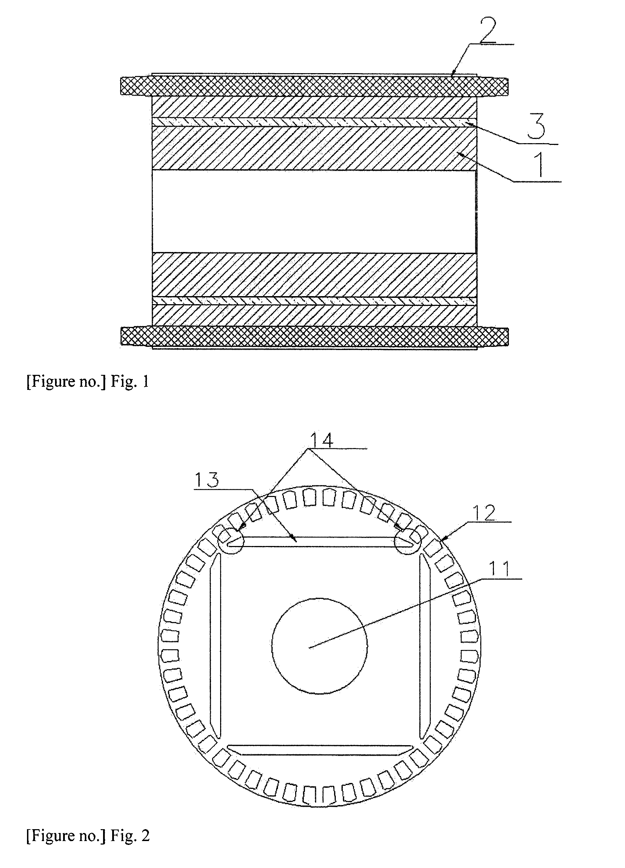

Line-start permanent magnet synchronous motors in the prior art mostly employ embedded high-strength permanent magnets to generate a magnetic field and torque. Rotors of line-start permanent magnet synchronous motors are composed mainly of standard laminations, magnetic bars, and conductive bars (as shown in Fig. 1). Standard laminations are provided thereon with an axial hole, conductive bar slots, embedded magnet slots and magnetic bridges (as shown in Fig. 2). The rotors of line-start permanent magnet synchronous motors in the prior art have the following structure: the standard laminations are stacked and aligned, then the magnetic bars and conductive bars are inserted into the embedded magnet slots and conductive bar slots of the standard laminations respectively. In order that a high level of performance and a high degree of utilization may be achieved for the magnets, it is necessary to use extremely narrow structures in the embedded magnet structure to avoid excessive leakage of magnetic flux. These extremely narrow structures are magnetic bridges, and standard laminations with magnetic bridges are connected to form a motor rotor by means of conductive bars or cast aluminium. Excessively narrow magnetic bridges can give better operating performance, but at the same time will weaken the mechanical strength after assembly of the rotor, leading to reduced reliability and lifespan of the product, especially when the field of application is motors running at high speed. The centrifugal force of the magnets in the rotor will be directly proportional to the rotor will be directly proportional to the square of the rotational speed, and the centrifugal force of the magnets will have a significant effect on the structural strength of the magnetic bridges.

### Summary of the invention

The object of the invention: in order to solve the problems in the prior art, the invention provides a high-strength line-start synchronous motor rotor.

In order to achieve the above object, said reinforced permanent magnet synchronous motor rotor for line-start of the present invention comprises: standard laminations, conductive bars, and magnetic bars; said reinforced permanent magnet synchronous motor rotor for line-start further comprises: reinforced laminations; said reinforced laminations being located between standard laminations; the magnetic bars are embedded in the standard laminations and separated by the reinforced laminations, and said conductive bars run through the standard laminations and reinforced laminations overlying one other.

Said standard laminations are provided thereon with an axial hole, conductive bar slots, embedded magnet slots and magnetic bridges. Said axial hole is located in the center of the standard lamination, said conductive bar slots are located around the edge of the standard lamination, said embedded magnet slots are located between the axial hole and the conductive bar slots, and the junctions of said conductive bar slots with the embedded magnet slots are magnetic bridges.

Said reinforced laminations are provided thereon only with a reinforced axial hole and reinforced conductive bar slots. Said reinforced axial hole is located in the center of the reinforced lamination, and said reinforced conductive bar slots are located around the edge of the reinforced lamination. The reinforced axial hole of said reinforced lamination has the same inner diameter as the axial hole of the standard lamination. The reinforced conductive bar slots of said reinforced lamination have the same shape and size as the conductive bar slots of the standard lamination. By adding reinforced laminations with no embedded magnet slots in the present invention, the strength of the rotor of a line-start synchronous motor is increased, without damaging the efficiency of high-performance magnets.

In the present invention, said magnetic bars are embedded in the embedded magnet slots of the standard laminations. The reinforced laminations are located between standard laminations, and moreover, the reinforced axial holes of the reinforced laminations are aligned with the axial holes of the standard laminations, and the reinforced conductive bar slots of said reinforced laminations are aligned with the conductive bar slots of the standard laminations. The conductive bars pass through the aligned conductive bar slots and reinforced conductive bar slots, thereby running through all of the stacked standard laminations and reinforced laminations.

Beneficial effects: the reinforced permanent magnet synchronous motor rotor for line-start provided by the invention has the following advantages compared to the prior art.

1. Comparing the structures of the reinforced permanent magnet synchronous motor rotor for line-start provided by the present invention and the permanent magnet motor rotor in the prior art, the mechanical strength of the motor rotor is increased effectively and the service life of the motor rotor is lengthened by adding reinforced laminations in the present invention, under the precondition that motor efficiency is not sacrificed.

2. Since the centrifugal force of the permanent magnets in a motor rotor when the rotor is revolving is directly proportional to the square of the rotational speed, the mechanical strength of the rotor will cause the rotor to fail when the rotor must be used in an environment of high speed running, but by adding reinforced laminations in the present invention, the mechanical strength of the motor rotor is increased, and moreover, a suitable number of reinforced laminations can be used according to different requirements for rotational speed. In the present invention, it is not necessary to alter the shape of the standard laminations, the operating performance of the motor is not affected, and the motor is suitable for different rotational speed application requirements.

### Description of the accompanying drawings

Fig. 1 is a sectional view of a reinforced permanent magnet synchronous motor rotor for line-start in the prior art.

Fig. 2 is a sectional view of a standard lamination in the prior art.

Fig. 3 is a sectional view of a reinforced lamination of the present invention.

Fig. 4 is a sectional view of a reinforced permanent magnet synchronous motor rotor for line-start as described in the present invention.

### Embodiments

The present invention will be further clarified below in conjunction with particular embodiments; it should be understood that these embodiments are merely for illustrating the present invention and not for limiting the scope thereof, and any modifications of the invention to equivalent forms made by those skilled in the art after reading the present invention shall fall within the limits defined by the claims attached to this application.

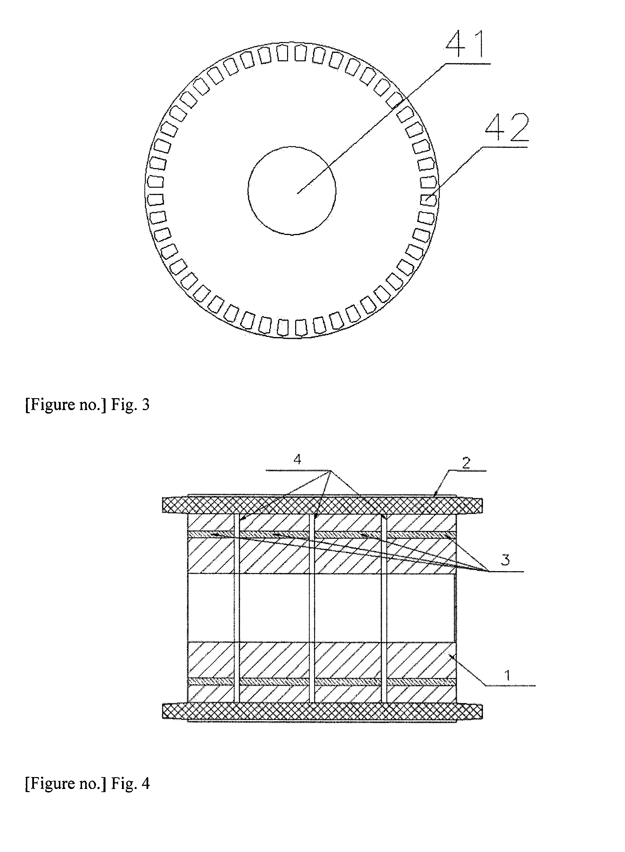

A reinforced permanent magnet synchronous motor rotor for line-start as shown in Fig. 3 and Fig. 4 comprises: standard laminations 1, conductive bars 2, magnetic bars 3 and reinforced laminations 4.

In the present embodiment, said standard laminations 1 are provided thereon with. an axial hole 11, conductive bar slots 12, embedded magnet slots 13 and magnetic bridges 14. Said axial hole 11 is located in the center of the standard lamination 1. Said conductive bar slots 12 are located around the edge of the standard lamination 1. Said embedded magnet slots 13 are located between the axial hole 11 and the conductive bar slots 12, and the junctions of said conductive bar slots 12 with the embedded magnet slots 13 are magnetic bridges 14. Said reinforced laminations 4 are provided thereon only with a reinforced axial hole 41 and reinforced conductive bar slots 42. Said reinforced axial hole 41 is located in the center of the reinforced lamination 4, and said reinforced conductive bar slots 42 are located around the edge of the reinforced lamination 4.

In this embodiment, the reinforced axial hole 41 of said reinforced lamination 4 has the same inner diameter as the axial hole 11 of the standard lamination 1; and the reinforced conductive bar slots 42 of said reinforced lamination 4 have the same shape and size as the conductive bar slots 12 of the standard lamination 1. Said magnetic bars 3 are embedded in the embedded magnet slots 13 of the standard laminations 1. The reinforced laminations 4 are located between standard laminations 1, and moreover, the reinforced axial holes 41 of the reinforced laminations 4 are aligned with the axial holes 11 of the standard laminations 1, and the reinforced conductive bar slots 42 of said reinforced laminations 4 are aligned with the conductive bar slots 12 of the standard laminations 1. The conductive bars 2 pass through the aligned conductive bar slots 12 and reinforced conductive bar slots 42, thereby running through all of the stacked standard laminations and reinforced laminations.

## Claims

1. A reinforced permanent magnet synchronous motor rotor for line-start, comprising: standard laminations (1), conductive bars (2), and magnetic bars (3), **characterized in that**: said reinforced permanent magnet synchronous motor rotor for line-start further comprises: reinforced laminations (4), said reinforced laminations (4) being located between standard laminations (1), the magnetic bars (3) being embedded in the standard laminations (1) and separated by the reinforced laminations (4), and said conductive bars (2) running through the standard laminations (1) and reinforced laminations (4) overlying one other.

2. The reinforced permanent magnet synchronous motor rotor for line-start as claimed in claim 1, **characterized in that**: said standard laminations (1) are provided thereon with an axial hole (11), conductive bar slots (12), embedded magnet slots (13) and magnetic bridges (14), said axial hole (11) is located in the center of the standard lamination (1), said conductive bar slots (12) are located around the edge of the standard lamination (1), said embedded magnet slots (13) are located between the axial hole (11) and the conductive bar slots (12), and the junctions of said conductive bar slots (12) with the embedded magnet slots (13) are magnetic bridges (14);
said reinforced laminations (4) are provided thereon only with a reinforced axial hole (41) and reinforced conductive bar slots (42), said reinforced axial hole (41) is located in the center of the reinforced lamination (4), and said reinforced conductive bar slots (42) are located around the edge of the reinforced lamination (4), the reinforced axial hole (41) of said reinforced lamination (4) has the same inner diameter as the axial hole (11) of the standard lamination (1), and the reinforced conductive bar slots (42) of said reinforced lamination (4) have the same shape and size as the conductive bar slots (12) of the standard lamination (1).

3. The reinforced permanent magnet synchronous motor rotor for line-start as claimed in claim 2, **characterized in that**: the magnetic bars (3) are embedded in the embedded magnet slots (13) of the standard laminations (1), the reinforced laminations (4) are located between standard laminations (1), and moreover, the reinforced axial holes (41) of the reinforced laminations (4) are aligned with the axial holes (11) of the standard laminations (1), and the reinforced conductive bar slots (42) of said reinforced laminations (4) are aligned with the conductive bar slots (12) of the standard laminations (1), the conductive bars (2) pass through the aligned conductive bar slots (12) and reinforced conductive bar slots (42), thereby running through all of the stacked standard laminations and reinforced laminations.
